# FASCICULE DE BREVET EUROPEEN

(11) **EP 2 832 069 B1**
(45) Date de publication et mention de la délivrance du brevet: **11.09.2019**
(21) Numéro de dépôt: 13719932.9
(22) Date de dépôt: 26.03.2013
(51) Int. Cl.: H04L 29/06, G06F 9/455

(54) **SYSTEME DE SUPERVISION DE LA SECURITE D'UNE ARCHITECTURE**
SYSTEM ZUR ÜBERWACHUNG DER SICHERHEIT EINER ARCHITEKTUR
SYSTEM FOR SUPERVISING THE SECURITY OF AN ARCHITECTURE

(30) Priorité: 29.03.2012 FR 1252876
(43) Date de publication de la demande: 04.02.2015
(73) Titulaire: Orange, 75015 Paris (FR)
(72) Inventeur: HE, Ruan, F-92130 Issy Les Moulineaux (FR); LACOSTE, Marc, F-78000 Versailles (FR); WAILLY, Aurélien, F-92150 Suresnes (FR)
(86) Numéro de dépôt international: PCT/FR2013/050648
(87) Numéro de publication internationale: WO 2013/144497

(56) Documents cités:
- EP-A1- 2 037 657
- EP-A1- 2 372 974
- US-A1- 2011 173 699
- SEBASTIAN ROSCHKE ET AL: "Intrusion Detection in the Cloud", 2009 EIGHTH IEEE INTERNATIONAL CONFERENCE ON DEPENDABLE, AUTONOMIC AND SECURE COMPUTING, 1 décembre 2009 (2009-12-01), pages 729-734, XP055011860, DOI: 10.1109/DASC.2009.94 ISBN: 978-0-76-953929-4
- AMIR VAHID DASTJERDI ET AL: "Distributed Intrusion Detection in Clouds Using Mobile Agents", ADVANCED ENGINEERING COMPUTING AND APPLICATIONS IN SCIENCES, 2009. ADVCOMP '09. THIRD INTERNATIONAL CONFERENCE ON, IEEE, PISCATAWAY, NJ, USA, 11 octobre 2009 (2009-10-11), pages 175-180, XP031584634, ISBN: 978-1-4244-5082-4

## Description

La présente invention concerne un système et un procédé de supervision de la sécurité d'une architecture qui comprend une pluralité d'environnements dit d'« informatique dans le nuage » interconnectés. Le terme habituellement utilisé pour ces environnements est « cloud computing », et le terme habituellement utilisé pour ce type d'architecture est le terme d'« architecture inter-cloud ». Plus précisément, l'invention concerne la protection d'environnements comprenant une pluralité d'architectures hétérogènes élémentaires interconnectées.

Elle trouve une application particulièrement intéressante dans la sécurisation des systèmes informatiques complexes de type cloud computing dont l'architecture est basée sur des ressources informatiques dématérialisées, mises à disposition d'un grand nombre d'utilisateurs qui y accèdent à distance et de manière évolutive dans le temps, c'est-à-dire à la demande.

Le concept de cloud computing, ou d'informatique dans le nuage, désigne des architectures informatiques dans lesquelles des traitements informatiques traditionnellement localisés sur des postes clients d'utilisateurs d'une entreprise, ou sur des serveurs de l'entreprise sont déportés sur des serveurs distants. Des ressources matérielles distantes, réparties à travers le monde, sont ainsi accédées à la demande via internet pour créer des services accessibles en ligne par les utilisateurs. Les applications et les données ne se trouvent plus sur l'ordinateur local de l'utilisateur, ou sur le serveur situé dans l'entreprise de cet utilisateur, mais dans un nuage composé d'un certain nombre de serveurs distants interconnectés.

Les offres à base de telles architectures sont nombreuses. Il existe ainsi différents modèles de services de cloud computing. On connaît ainsi un premier modèle, appelé « SaaS » (de l'anglais « Software-as-a-Service ») dans lequel un fournisseur de solution d'architecture cloud computing met à disposition de l'utilisateur une pile logicielle complète, depuis le matériel jusqu'aux applications. On connaît un deuxième modèle, appelé « PaaS » (de l'anglais « Platform-as-a-Service »), dans lequel les utilisateurs déploient leurs propres applications à l'aide d'environnements et d'outils mis à disposition par le fournisseur de cloud. Enfin, on connaît un troisième modèle, appelé « IaaS » (de l'anglais « Infrastructure-as-a-Service ») dans lequel le fournisseur de cloud computing met à disposition des utilisateurs des ressources de calcul, de communication ou de stockage. Les utilisateurs peuvent alors déployer et exécuter n'importe quel logiciel, y compris leur propre système d'exploitation, qui exploite les ressources ainsi mises à disposition. On distingue également plusieurs modèles de déploiement d'architectures cloud computing : un modèle public, un modèle privé, un modèle communautaire et un modèle hybride. Avec le modèle de cloud public, les ressources sont mises à disposition par un fournisseur de solutions et accessibles via Internet. Le modèle de cloud privé est opéré à destination d'une seule organisation. Le modèle de cloud communautaire est mis à disposition de plusieurs organisations qui partagent une problématique commune. Enfin, le cloud hybride est composé de différentes architectures cloud publics, privés, ou communautaires. On appelle également ce dernier type de modèle une infrastructure inter-cloud.

Une architecture cloud computing repose en général sur une pluralité de machines physiques interconnectées par un réseau. Ces machines sont généralement regroupées dans une ou plusieurs fermes de serveurs (le terme habituellement utilisé est le terme anglais « datacenter ») géographiquement réparties et connectées par internet, ou par un réseau privé. Dans cette architecture on distingue alors un réseau inter-fermes, qui connecte les fermes de serveurs entre elles, un réseau intra-fermes qui connecte les machines physiques à l'intérieur d'une ferme. Une architecture inter-cloud correspond alors à la mise en réseau d'architectures cloud élémentaires, construites aux dessus des fermes de serveurs interconnectées, chaque architecture cloud élémentaire pouvant opérer un modèle de déploiement ou de service particulier. La présente invention s'intéresse à une architecture inter-cloud.

On comprend qu'une telle architecture peut être assez complexe, en termes de types de réseaux qui coexistent, d'hétérogénéité des équipements et des offres. On comprend également qu'en termes de gestion de la sécurité, une telle architecture induit une complexité très importante.

Du point de vue de la sécurité, il est classique que dans une architecture en cloud computing, des ressources physiques et virtuelles soient organisées et supervisées par domaines de sécurité. Un domaine de sécurité regroupe une pluralité de ressources à protéger et à superviser, des règles de sécurité à appliquer aux ressources du domaine pour assurer un fonctionnement sécurisé à l'intérieur du domaine. Les ressources peuvent être groupées dans un domaine selon différents critères : selon qu'elles ont trait à une même fonctionnalité, par exemple le contrôle d'accès, selon qu'elles appartiennent à une même organisation, selon qu'elles se situent à l'intérieur d'une même frontière physique, etc. Dans ce dernier cas, un domaine de sécurité peut regrouper les ressources d'une machine physique, d'une ferme ou d'une architecture cloud. Un domaine de sécurité, par exemple le domaine de sécurité associé au contrôle d'accès, comprend aussi bien des ressources utilisateurs à protéger et à superviser, par exemple une application de saisie de mot de passe, que des ressources associées à des composants de sécurité permettant de garantir l'application de règles de sécurité sur les ressources du domaine. Les composants de sécurité peuvent assurer des fonctions de détection ou de réaction et comprennent par exemple des pare-feux, des systèmes de détection d'intrusions, des systèmes de prévention d'intrusions, etc.

Par ailleurs, il est également classique qu'une architecture cloud soit découpée en différentes couches d'exécution. Dans ce modèle, on distingue une couche physique, qui comprend par exemple des ressources de calcul, de stockage, etc., une couche de virtualisation qui permet la gestion, c'est-à-dire la création et la libération de machines virtuelles, et une couche virtuelle qui comprend des machines virtuelles. Parmi les machines virtuelles, on distingue les machines virtuelles « utilisateur » et les machines virtuelles « de sécurité ».

De cette organisation en domaines et en couches résulte une complexité importante pour une architecture inter-cloud, une exposition à de nombreuses menaces de sécurité et une gestion de la sécurité extrêmement complexe.

Des solutions de gestion de la sécurité existent. Certaines proposent la gestion de la sécurité d'une architecture couche par couche. Cependant ces solutions gèrent difficilement la cohérence entre des couches de niveaux d'abstraction différents. D'autres proposent une gestion de la sécurité par domaine. Cependant, ces solutions ne permettent pas de gérer la sécurité entre différents domaines. En tout état de cause, de telles solutions sont peu adaptées à la complexité des architectures inter-cloud qui peuvent mettre en oeuvre des mécanismes de sécurité différents dans chacune des architectures en cloud computing qui fait partie de l'architecture inter-cloud. Les documents "Intrusion Détection in the Cloud" XP55011860, et "Distributed Intrusion Détection in Clouds Using Mobile Agents" XP031584634 par exemple, proposent des solutions pour détecter des intrusion dans des architectures du types nuage.

Il n'existe actuellement pas de solution satisfaisante permettant la gestion de la sécurité d'une architecture inter-cloud.

Un des buts de l'invention est de remédier à des insuffisances/inconvénients de l'état de la technique et/ou d'y apporter des améliorations.

A cette fin l'invention propose un procédé de supervision de la sécurité d'une architecture comprenant une pluralité de nuages interconnectés, un nuage comprenant une pluralité de ressources et un superviseur de sécurité, la pluralité de ressources formant dans le nuage une pluralité de groupes de ressources associés respectivement à un domaine de sécurité, un contrôleur de sécurité supervisant les ressources du domaine, une pluralité de machines physiques comprenant les ressources de la pluralité de nuages, le procédé comprenant :
- une étape de réception d'un événement de sécurité par un contrôleur de sécurité d'un premier nuage, en provenance d'une première ressource associée à un premier domaine de sécurité,
- une étape d'envoi dudit événement de sécurité au superviseur de sécurité du premier nuage,
- une étape d'envoi par le superviseur de sécurité du premier nuage d'un ordre de sécurité en réaction à l'événement de sécurité à au moins un deuxième contrôleur de sécurité du premier nuage, et d'envoi par le deuxième contrôleur de sécurité à une deuxième ressource supervisée par le deuxième contrôleur.

Le procédé selon l'invention permet de superviser la sécurité d'une architecture hétérogène composée de plusieurs architectures en cloud computing interconnectées, de manière homogène et ce, quelque soit le nombre de domaines de sécurité qui structurent une architecture cloud. Le procédé permet ainsi de déclencher des réactions inter-domaines, c'est-à-dire entre plusieurs domaines de sécurité, à l'intérieur d'une architecture cloud, ce que ne permettent pas les solutions actuelles de supervision. En particulier, les mécanismes de sécurité inter-domaines sont coordonnés au moyen du contrôleur de sécurité qui agit comme un point de décision finale dans les réactions ou ordres de sécurité à transmettre à des ressources qu'il supervise, tout domaine confondu.

Une réaction inter-domaines consiste par exemple en une reconfiguration de pare-feux de domaines de sécurité adjacents à un premier domaine de sécurité où une intrusion a été détectée. Cette opération de reconfiguration consiste à modifier les règles de configuration de ces pare-feux afin de bloquer préventivement un trafic jugé potentiellement malveillant. Ainsi, même si le trafic peut franchir les pare-feux du premier domaine, il sera bloqué par les pare-feux des domaines adjacents afin d'éviter une propagation d'une attaque consécutive à l'intrusion.

Avantageusement, le procédé selon l'invention comprend une étape de détection d'une incohérence entre une base de connaissance du superviseur, ladite base comprenant tous les événements de sécurité envoyés par les contrôleurs du premier nuage et une base de règles du premier nuage, ladite base comprenant les règles de fonctionnement à l'intérieur du premier nuage.

La supervision inter-domaines est réalisée de manière automatique. En effet, le procédé garantit un couplage entre la détection d'événements de sécurité, la prise de décision et la réaction qui se traduit par des ordres de sécurité transmis à des ressources d'une architecture cloud. Cette automatisation est rendue possible par la confrontation des événements de sécurité remontés, avec une base de réactions gérée au niveau du contrôleur de sécurité et une prise de décision par ce contrôleur réalisée de manière autonome.

Dans un exemple de réalisation de l'invention, la première ressource comprise dans le premier domaine de sécurité étant associée à un premier niveau d'exécution, le procédé comprend en outre une étape de sélection et d'envoi d'un deuxième ordre de sécurité par le contrôleur de sécurité du premier domaine à une troisième ressource du premier domaine de sécurité, la troisième ressource étant associée à un deuxième niveau d'exécution.

Selon ce mode de réalisation, le procédé permet d'orchestrer la gestion de la sécurité au niveau d'un nombre arbitraires de couches d'exécution. Ainsi, le contrôleur de sécurité dispose des moyens, en termes d'interfaces, de déclencher une réaction consécutive à un événement de sécurité reçu d'une première ressource appartenant à une première couche d'exécution, à une deuxième ressource appartenant à une couche d'exécution différente de celle de la première ressource.

Avantageusement, les superviseurs de sécurité respectifs des nuages comprennent un ensemble de règles de sécurité formant une politique de sécurité, le procédé comprenant :
- une étape d'envoi par le superviseur du premier nuage d'informations relatives à l'événement de sécurité aux autres superviseurs de nuages, et
- une étape de négociation entre le premier superviseur et les autres superviseurs d'un deuxième ordre de sécurité, l'étape de négociation étant basée sur les informations relatives à l'événement de sécurité et sur les politiques de sécurité respectives des superviseurs de sécurité,
- une étape d'envoi à au moins une troisième ressource du deuxième ordre de sécurité, la troisième ressource étant comprise dans un nuage différent du premier nuage.

Le procédé de l'invention étant la supervision de la sécurité à l'ensemble de l'architecture inter cloud et permet ainsi d'inférer des réactions, en tant qu'ordres de sécurité, à des ressources qui appartiennent à une architecture cloud différente de celle dans laquelle un premier événement de sécurité est survenu. Cette possibilité est offerte par les capacités de négociation entre les différents superviseurs, permettant ainsi de négocier sur la base de leur politique de sécurité. Ainsi, il devient possible de prévénir des événements de sécurité, avant que ceux-ci ne se produisent. En effet, un premier événement de sécurité survenu dans une première architecture cloud, et remonté par le superviseur de cette première architecture, peut déclencher une réaction au niveau d'une deuxième architecture cloud sans qu'aucun événement de sécurité n'ait été remonté dans cette deuxième architecture. Au cours des négociations entre les superviseurs, le superviseur de la deuxième architecture cloud peut décider de mettre en oeuvre une mesure préventive, sous forme d'un ordre de sécurité, au vu de l'événement de sécurité qui s'est produit dans la première architecture et de sa politique de sécurité.

L'invention concerne aussi un système de supervision de la sécurité d'une architecture informatique, ladite architecture comprenant une pluralité de nuages interconnectés, un nuage comprenant une pluralité de ressources et un superviseur de sécurité, la pluralité de ressources formant dans le nuage une pluralité de groupes de ressources associés respectivement à un domaine de sécurité, un contrôleur de sécurité supervisant les ressources du domaine, une pluralité de machines physiques comprenant les ressources de la pluralité de nuages, le système comprenant :
- des moyens de réception compris dans un contrôleur de sécurité d'un premier nuage, agencés pour recevoir un événement de sécurité en provenance d'une première ressource associée à un premier domaine de sécurité,
- des premiers moyens d'envoi, compris dans le contrôleur de sécurité, agencés pour envoyer ledit événement de sécurité au superviseur de sécurité du premier nuage,
- des deuxièmes moyens d'envoi, compris dans le superviseur du premier nuage, agencés pour envoyer un ordre de sécurité en réaction à l'événement de sécurité à au moins un deuxième contrôleur de sécurité du premier nuage,
- des troisièmes moyens d'envoi, compris dans le deuxième contrôleur, agencés pour envoyer à une deuxième ressource supervisée par le deuxième contrôleur, l'ordre de sécurité.

De nombreux détails et avantages de l'invention seront mieux compris à la lecture de la description d'un mode particulier de réalisation en référence aux dessins annexés donnés à titre non limitatif, et dans lesquels :
- la figure 1 présente un exemple de réalisation d'une architecture de supervision qui met en oeuvre un procédé de supervision décrit en relation avec la figure 2 ;
- la figure 2 représente les étapes du procédé de supervision de la sécurité, selon un premier exemple de réalisation.
- la figure 3 est une représentation schématique d'une contrôleur de sécurité de l'architecture selon l'invention ;
- la figure 4 est une représentation schématique d'un superviseur de sécurité de l'architecture selon l'invention.

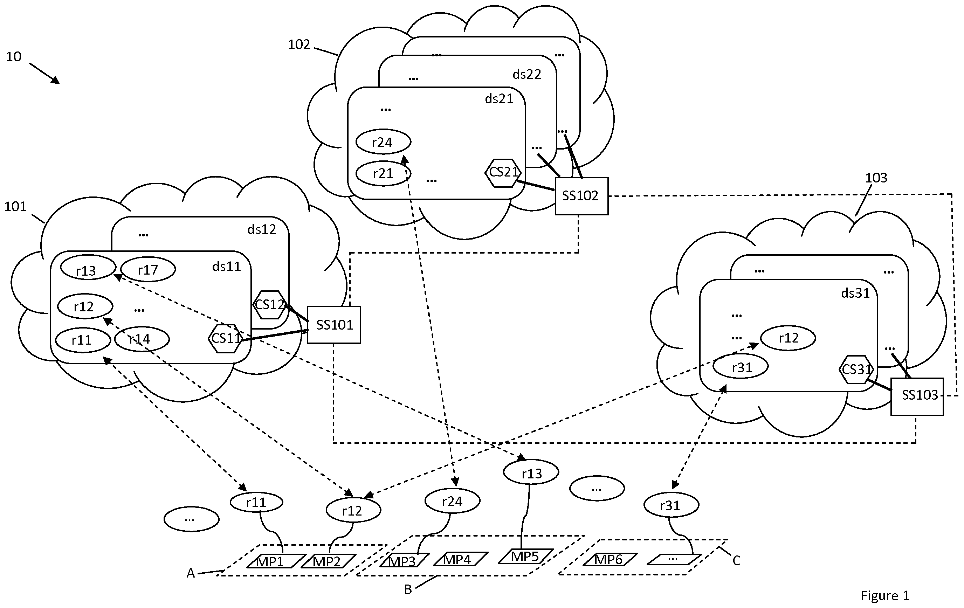

Une architecture de supervision de la sécurité d'un système, selon un premier exemple de réalisation, va maintenant être décrite en relation avec la figure 1.

Une architecture 10 comprend une pluralité d'architectures dans le nuage élémentaires, ou nuages, 101, 102, 103 (le terme habituellement utilisé pour désigner une infrastructure dans le nuage, ou un nuage, est le terme d' « architecture en cloud computing »). Chaque nuage 101, 102, 103, comprend :
- des ressources. Par exemple, le nuage 101 comprend les ressources r11, r12, r13, r14, r17, etc. ; le nuage 102 comprend les ressources r21, r24, etc. ; et le nuage 103 comprend les ressources r31, r12 ; etc. ;
- des contrôleurs de sécurité. Le nuage 101 comprend les contrôleurs CS11 et CS12 ; le nuage 102 comprend le contrôleur CS21, etc. ; le nuage 103 comprend le contrôleur CS31, etc. ;
- un superviseur de sécurité, SS101, SS102, SS103.

Une telle architecture qui connecte plusieurs architectures cloud computing élémentaires constitue une architecture inter-cloud.

Les ressources r11, r12, r13, r14, r17, r21, r24, r31, etc., sont regroupées de manière à former une pluralité de groupes, associés respectivement à un domaine de sécurité ds11, ds12, ds21, ds22, ds31, etc. Chaque domaine de sécurité ds11, ds12, ds21, ds22, ds31, etc., regroupe des ressources selon un critère prédéfini. Par exemple, un domaine de sécurité regroupe des ressources qui ont trait à une même fonction de sécurité, par exemple le contrôle d'accès, ou des ressources situées à l'intérieur d'une même frontière physique, par exemple des ressources qui sont issues d'une même machine physique, ou des ressources qui sont situées à l'intérieur d'une même frontière logique, par exemple des ressources qui appartiennent à un même sous-réseau, etc. On remarque qu'une ressource peut être associée à plusieurs domaines de sécurité. C'est le cas par exemple de la ressource r12 qui appartient au domaine ds11 du nuage 101 et au domaine ds31 du nuage 103.

Dans cette architecture, un contrôleur de sécurité d'un domaine, par exemple le contrôleur CS11, est en charge de la supervision de l'ensemble des ressources du domaine de sécurité, ici ds11. Le contrôleur de sécurité CS11 est adapté pour être informé par les ressources du domaine ds11 de la survenue d'événements de sécurité supervisés, pour agréger ces événements de sécurité et pour déclencher, le cas échéant, une réaction consécutive à la remontée des événements de sécurité sur une ou plusieurs ressources qu'il supervise. La réaction correspond à un ordre de sécurité envoyé à une ressource pour exécution. Une telle réaction, locale au domaine de sécurité ds11 est appelée réaction réflexe. Elle est immédiate à la survenue de l'événement de sécurité et est destinée par exemple à réagir à la détection d'une attaque. Pour ce faire, le contrôleur de sécurité CS11 comprend par exemple une base de règles (non représentée sur la figure 1) qui à un événement de sécurité associe une réaction sur une ou plusieurs des ressources du domaine ds11 qu'il supervise. Une telle réaction permet de répondre rapidement à des événements de sécurité critiques. Le contrôleur de sécurité CS11 est également adapté pour interagir avec le superviseur de sécurité du nuage SS101, en lui transmettant tout événement de sécurité reçu d'une ressource du domaine ds11 et en transmettant, le cas échéant, des ordres de sécurité reçus du superviseur de sécurité du nuage SS101 à une ou plusieurs ressources du domaine ds11. Le contrôleur de sécurité CS11 permet ainsi de créer et gérer des règles inter-niveaux d'exécution.

Dans cette architecture, le superviseur de sécurité d'un nuage, par exemple le superviseur SS101 du nuage 101, est apte à piloter l'ensemble des contrôleurs de sécurité du nuage 101, en l'espèce CS11, CS12, etc., et à synchroniser la détection et la réaction entre les différents domaines du nuage 101 de manière à déclencher des réactions cohérentes et optimisées sur des ressources du nuage 101. En effet, la survenue d'un événement de sécurité sur une ressource d'un premier domaine, par exemple ds11, peut être liée à une ressource d'un deuxième domaine, par exemple ds12, et peut donc nécessiter une réaction sur une ressource d'un domaine différent de celui dans lequel se trouve la ressource qui est à l'origine de la survenue l'événement de sécurité. Pour mettre en oeuvre une telle synchronisation, le superviseur de sécurité SS101 comprend une base de connaissance (non représentée sur la figure 1) adaptée pour enregistrer tout événement de sécurité transmis par un contrôleur de sécurité du nuage 101 et une base de règles de supervision (non représentée sur la figure 1). Ces règles sont définies par un administrateur (non représenté sur la figure 1) du nuage 101. A cet effet la base de règles comprend, en association avec une règle, une ou des actions à déclencher lorsqu'une règle n'est pas respectée. Le superviseur SS101 est également apte à piloter indirectement les contrôleurs de sécurité des autres nuages 102, 103, par l'intermédiaire des autres superviseurs SS102, SS103. Plus précisément, le superviseur de sécurité SS101 est apte à négocier avec les autres superviseurs de l'architecture, ici SS102 et SS103, de manière à corréler une politique de sécurité qu'il applique au niveau du nuage 101 avec des politiques de sécurité respectives des autres nuages. La politique de sécurité d'un nuage définit une stratégie de sécurité du nuage et peut comprendre différents ensembles de règles à appliquer, selon l'orientation que la stratégie prend. Cette capacité de négociation avec les autres superviseurs de l'architecture 10 permet d'assurer une supervision globale et homogène de l'architecture en termes de sécurité. Par exemple, si les politiques de sécurité respectives des nuages sont basées sur des formalismes différents, la négociation entre les superviseurs de sécurité respectifs des nuages permet de comparer des termes syntaxiquement différents mais de sémantique équivalente et de les associer. Une telle négociation permet ainsi, suite à un événement de sécurité survenu sur une ressource d'un premier nuage, par exemple le nuage 101, d'inférer une réaction sur une ressource d'un deuxième nuage, par exemple le nuage 102. De façon avantageuse, la réaction inférée sur le deuxième nuage 102 peut empêcher la survenue d'un événement de sécurité critique dans le deuxième nuage 102

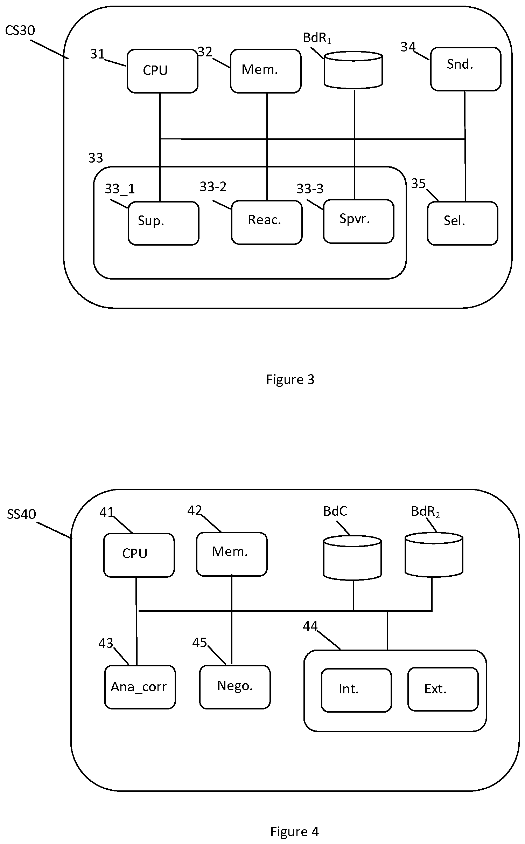

La structure d'un contrôleur de sécurité, respectivement d'un superviseur de sécurité, sera détaillée en relation avec la figure 3, respectivement avec la figure 4.

Selon un principe connu des architectures en cloud computing, les nuages 101, 102, 103 s'appuient sur une pluralité de machines physiques MP1, MP2, MP3, MP4, MP5, MP6, etc., regroupées le cas échéant dans des fermes de serveurs A, B, C ; le terme habituellement utilisé pour les fermes de serveurs est le terme anglais « datacenter ». Les ressources r11, r12, r13, r14, r17, r21, r24, r31, etc., des nuages 101, 102, 103, comprises dans les machines physiques MP1, MP2, MPp3, ..., sont mises à disposition des nuages 101, 102, 103 afin de composer l'architecture inter-cloud 10.

De manière connue, chaque ressource est associée à une couche d'exécution. Différents modèles en couches d'exécution existent. Par exemple, dans un premier modèle, une première couche d'exécution est une couche d'exécution matérielle. Selon ce modèle, la ressource r11, associée par exemple à cette première couche d'exécution peut correspondre à une interface réseau, ou à de la mémoire, ou à un micro-processeur, etc. Dans ce premier modèle, une deuxième couche d'exécution est une couche de virtualisation. La couche de virtualisation permet la gestion, c'est-à-dire la création et la libération de machines virtuelles exécutées de manière concurrente sur une même machine physique. Cette couche de virtualisation est mise en oeuvre par un hyperviseur (non représenté sur la figure 1) qui gère l'allocation des ressources physiques entre différentes instances de machines virtuelles. Ainsi, la ressource r12, associée par exemple à cette deuxième couche d'exécution peut correspondre à l'hyperviseur, ou à un bus logiciel bas niveau, destiné à gérer les communications entre les machines virtuelles hébergées par la machine physique. Enfin, dans ce modèle, une troisième couche d'exécution est une couche virtuelle. Les ressources associées à cette couche sont des machines virtuelles qui s'exécutent sur la machine physique. Les machines virtuelles peuvent être des machines virtuelles utilisateurs qui peuvent comprendre des données ou du code sensibles à protéger. Les machines virtuelles peuvent également être des machines virtuelles de sécurité, dédiées à la sécurité et destinées à protéger les machines virtuelles utilisateurs. Les machines virtuelles de sécurité sont par exemple des pare-feux, des systèmes de détection d'intrusions, des systèmes de prévention d'intrusions, des outils anti-logiciels malveillants (le terme habituellement utilisé est le terme anglais « anti-malware »), etc. Ainsi, la ressource r13 associée par exemple à cette troisième couche est une machine virtuelle utilisateur de type application de saisie de mots de passe. La ressource r17, associée également à cette troisième couche est par exemple un pare-feu, destiné à filtrer des entrées et des sorties d'un réseau en fonction de règles prédéfinies. D'autres modèles en couches d'une infrastructure en cloud computing sont connus de l'homme du métier et ne sont pas décrits ici. Dans tous ces modèles, une ressource est associée à une couche d'exécution particulière.

Ainsi un domaine de sécurité, par exemple le domaine ds11, regroupe les ressources associées à ce domaine, par exemple le domaine du contrôle d'accès, et le contrôleur de sécurité CS11, associé au domaine ds11, accède aux ressources du domaine ds11 par l'intermédiaire de la couche d'exécution à laquelle elles sont associées. A cette fin, chaque couche d'exécution comprend deux interfaces permettant au contrôleur de sécurité CS11 d'accéder aux ressources associées à cette couche d'exécution. Une première interface, appelée interface de supervision (le terme habituellement utilisé est le terme anglais « monitoring ») permet aux ressources de faire remonter au contrôleur de sécurité CS11 tout événement de sécurité supervisé. Une deuxième interface, appelée interface d'administration permet au contrôleur de sécurité CS11 d'envoyer un ordre de sécurité en réaction à un événement de sécurité préalablement remonté dans l'architecture. Pour des raisons de clarté de la figure, les interfaces ne sont pas représentées. On note que selon l'invention, un ordre de sécurité transmis à une première ressource d'un domaine de sécurité par un premier contrôleur de sécurité n'est pas forcément consécutif à un événement de sécurité remonté par la première ressource au premier contrôleur. Ainsi, l'ordre de sécurité transmis à la première ressource peut être consécutif à un événement de sécurité transmis d'une deuxième ressource du même domaine de sécurité, ou d'une deuxième ressource d'un autre domaine de sécurité du même nuage. Selon l'invention, l'ordre de sécurité peut également être consécutif à un événement de sécurité survenu dans un autre nuage de l'architecture 10. Par ailleurs, un ordre de sécurité peut impacter une ressource d'une couche d'exécution différent de celui par l'intermédiaire duquel l'événement de sécurité a été remonté.

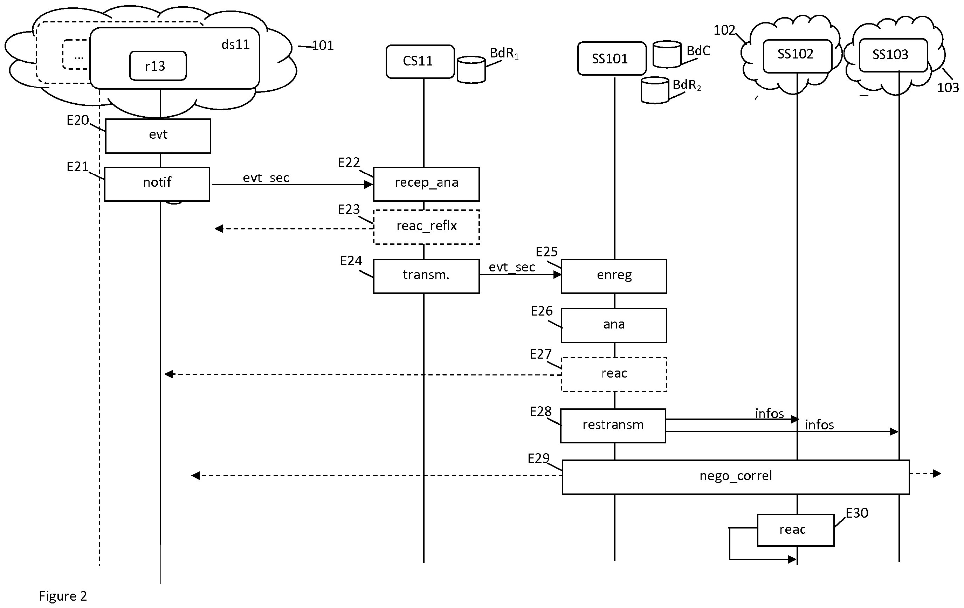

Un procédé de supervision de la sécurité d'un système, selon un premier exemple de réalisation, va maintenant être décrit en relation avec la figure 2. Le procédé de supervision de la sécurité est mis en oeuvre sur une architecture conforme à l'architecture de supervision 10 décrite en relation avec la figure 1.

Dans une phase préalable de configuration, non représentée sur la figure 2, les contrôleurs de sécurité CS11, CS12, CS21, CS31, etc. de l'architecture 10 s'enregistrent auprès des couches d'exécution à superviser au moyen des interfaces de supervision. Ainsi, les contrôleurs de sécurité sont aptes à recevoir les événements de sécurité qui surviennent sur les ressources qu'ils supervisent, et à transmettre des ordres de sécurité aux ressources qu'ils supervisent.

Dans une étape initiale E20 de survenue d'un événement, un événement de sécurité supervisé se produit sur une ressource, par exemple la ressource r13 qui appartient à une première couche d'exécution (non représentée sur la figure 2) et qui fait partie du domaine de sécurité ds11 du nuage 101. Le domaine de sécurité ds11 est par exemple un domaine de sécurité lié au contrôle d'accès, la ressource r13 est par exemple une application de saisie d'un mot de passe. Un tel événement de sécurité est par exemple une erreur de saisie de mot de passe par un utilisateur.

Dans une étape E21 de notification, la ressource r13, paramétrée pour faire remonter un tel événement, transmet au contrôleur de sécurité CS11 du domaine auquel elle est associée ledit événement, à travers l'interface de supervision (non représentée sur la figure 2) de la couche d'exécution à laquelle elle est associée.

Dans une étape E22 de réception et d'analyse, le contrôleur de sécurité CS11 reçoit l'événement de sécurité envoyé par la ressource r13 au cours de l'étape précédente. Le contrôleur de sécurité CS11 analyse cet événement. Cette analyse est destinée à inférer le cas échéant une réaction immédiate sur la ressource par le biais d'un ordre de sécurité à appliquer. Lors de cette analyse, le contrôleur vérifie s'il est paramétré pour mettre en oeuvre une réaction sur la ressource. A cette fin, il consulte une base de réactions BdR₁ dont il dispose. Une telle base BdR₁ définit pour un événement de sécurité une réaction associée, ou ordre de sécurité. Si un tel ordre de sécurité est présent dans la base, le contrôleur, dans une étape E23 de réaction réflexe, transmet à la ressource r13 ou à une autre ressource du même domaine ds11 l'ordre de sécurité via l'interface d'administration de la couche d'exécution associée. Si aucun ordre de sécurité n'est présent dans la base, il ne transmet rien à la ressource. L'étape E23 de réaction réflexe, optionnelle, figure en pointillés sur la figure 2

Dans une étape E24 suivante de transmission, le contrôleur de sécurité CS 11 transmet au superviseur de sécurité SS101 du nuage 101 l'événement de sécurité qu'il a reçu au cours de l'étape E22. Tous les contrôleurs de sécurité du nuage 101 sont susceptibles de lui transmettre les événements de sécurité de leur domaine de sécurité respectif. Ainsi, le superviseur de sécurité SS101 est un concentrateur des événements de sécurité susceptibles de survenir dans le nuage.

Dans une étape E25 d'enregistrement, le superviseur de sécurité SS101 enregistre l'événement de sécurité reçu au cours de l'étape précédente dans une base de connaissance BdC. La base de connaissance est destinée à enregistrer tous les événements de sécurité issus des contrôleurs de sécurité du nuage 101.

Dans une étape E26 d'analyse, le superviseur de sécurité SS101 vérifie la cohérence de la base de connaissance BdC ainsi enrichie avec une deuxième base de règles prédéfinies BdR₂. Cette deuxième base de règles BdR₂ est préalablement définie par un administrateur du nuage 101. Cette deuxième base BdR₂ définit des règles à respecter au niveau du nuage 101, en particulier par toutes les ressources du nuage 101. La deuxième base de règles BdR₂ définit également une réaction à mettre en oeuvre sur une ou plusieurs ressources comprise dans le nuage 101 lorsqu'une règle n'est pas respectée. La réaction correspond à un ordre de sécurité à appliquer à une ou plusieurs ressources. On note qu'un ordre de sécurité peut impacter une ou plusieurs ressources d'un ou de plusieurs domaines de sécurité du nuage 101, les ressources impactées pouvant être situées à différentes couches d'exécution.

Si la base de connaissance BdC n'est pas cohérente avec la deuxième base de règles BdR₂ gérée par le superviseur de sécurité SS101, alors le superviseur de sécurité SS101 déclenche dans une étape E27 de réaction, la réaction ou les réactions définie(s) dans la deuxième base de règles BdR₂ pour la règle qui n'est pas respectée en envoyant un ou plusieurs ordres de sécurité. Cette réaction est appliquée à une ou plusieurs ressources du nuage 101, situées dans un ou plusieurs domaines de sécurité différents et à une ou plusieurs couches d'exécution différentes. Ainsi, selon l'invention, le superviseur SS101 permet la mise en oeuvre de règles inter-domaines de sécurité. Le superviseur de sécurité SS101 sert ainsi de point de décision finale et garantit le maintien d'une cohérence globale de la sécurité entre l'ensemble des ressources du nuage 101. On note que cette étape E27 de réaction n'est pas exécutée lorsque la base de connaissance BdC est cohérente avec la deuxième base de règles BdR₂. Elle figure en pointillés sur la figure 2.

Dans une étape E28 de retransmission, le superviseur de sécurité SS101 transmet aux superviseurs de sécurité des autres nuages de l'architecture, en l'espèce aux superviseurs SS102 et SS103 des nuages 102 et 103 de l'architecture 10, des informations relatives à l'événement de sécurité qui s'est produit au niveau de la ressources r13. Ces informations peuvent comprendre l'événement de sécurité tel que reçu du contrôleur de sécurité CS11 au cours de l'étape 22 de réception et d'analyse, le cas échéant l'ordre de sécurité transmis par le contrôleur de sécurité CS11 à une ou plusieurs ressources du domaine ds11 au cours de l'étape E23 de réaction réflexe, ou/et par le superviseur de sécurité SS101 au cours de l'étape de réaction E27. L'objectif de cette étape E28 de retransmission est d'informer les autres superviseurs de sécurité SS102, SS103, d'un événement de sécurité survenu dans le nuage 101 et de la façon dont il a été traité dans le nuage 101. En prévenant ainsi les autres superviseurs SS102 et SS103 de l'architecture 10 il devient possible d'inférer des réactions de sécurité dans des nuages autres que ceux où le problème de sécurité a été détecté. Ainsi, il est possible de prévenir la survenue du même événement de sécurité dans un autre nuage, ou d'identifier que l'origine de l'événement de sécurité se situe dans un autre nuage, etc.

Dans une étape E29 de négociation et de corrélation de politiques de sécurité, les superviseurs de sécurité SS101, SS102, SS103, des différents nuages 101, 102, 103, négocient sur la base de ces informations, en l'espèce l'événement de sécurité et le cas échéant l'ordre ou les ordres de sécurité qui a/ont été appliqué(s), et de leur politique de sécurité respective. Chaque nuage 101, 102, 103, plus précisément chaque administrateur de nuage, définit dans une politique de sécurité une stratégie de sécurité ou un plan d'actions pour maintenir un certain niveau de sécurité dans le nuage. La politique de sécurité d'un nuage peut se traduire par un ensemble de règles techniques à respecter au niveau des ressources du nuage. Par exemple, la politique de sécurité peut définir des règles pour la gestion des mots de passe, des règles pour les accès à distance, etc. Par exemple, une règle peut établir que dans un cas où un utilisateur saisit trois fois de suite un mot de passe erroné sur une application de saisie de mot de passe en vue d'accéder à une application donnée, alors l'accès de cet utilisateur à cette application est bloqué. On connaît de nombreux formalismes pour décrire des politiques de sécurité formelles. Dans le cas de l'architecture 10, qui peut être hétérogène dans le sens où les nuages 101, 102, 103 ont chacun une politique de sécurité, il est possible que les formalismes utilisés pour décrire les politiques de sécurité respectives des nuages soient différents. Dans ce cas, l'étape de négociation entre les différents superviseurs SS101, SS102, SS103 permet de fédérer les différentes politiques de sécurité appliquées au niveau des différents nuages 101, 102, 103 et d'établir des équivalences entre une première règle définie dans le premier nuage 101 au moyen d'un premier formalisme, à une deuxième règle définie dans le deuxième nuage 102 au moyen d'un deuxième formalisme. Ainsi, cette étape de négociation permet de comparer les différentes politiques de sécurité appliquées dans les différents nuages, bien que celles-ci soient décrites dans des formalismes différents.

Dans une étape suivante E30 de réaction inter-cloud, optionnelle, un nouvel ordre de sécurité est envoyé par un deuxième superviseur de sécurité, par exemple le superviseur SS102 à une ou plusieurs ressources du nuage 102. Ce nouvel ordre, consécutif à l'étape E29 de négociation permet par exemple de prévenir un nouvel événement de sécurité dans le nuage 102 qui ne s'est pas encore produit mais qui peut se produire au même titre que l'événement de sécurité s'est produit dans le nuage 101. Dans cet exemple, l'événement de sécurité qui s'est produit au cours de l'étape E20 de survenue d'un événement de sécurité a été identifié comme pouvant se produire dans le nuage 102 lors de la négociation. Dans un autre exemple de réalisation, l'étape de négociation E29 permet d'identifier que l'événement de sécurité qui s'est produit au cours de l'étape E20 dans le nuage 101 trouve son origine dans une ressource du nuage 102. Ainsi, la négociation menée par les différents superviseurs de sécurité SS101, SS102, SS103 peut induire des réactions sur n'importe quelle ressource de l'architecture 10.

Dans un exemple d'application de l'invention, on considère un client d'un fournisseur d'une architecture conforme à l'architecture décrite en relation avec la figure 1. L'architecture comprend plusieurs architectures cloud computing élémentaires interconnectées. Ces architectures représentent respectivement les nuages 101, 102, 103. Chaque architecture cloud élémentaire possède son propre modèle de service. On connaît différents modèles de service. Dans un premier modèle, appelé «SaaS» (de l'anglais « Software-as-a-Service »), un fournisseur de solution d'architecture cloud computing met à disposition de l'utilisateur une pile logicielle complète, depuis le matériel jusqu'aux applications. Dans un deuxième modèle, appelé « PaaS » (de l'anglais « Platform-as-a-Service »), les utilisateurs déploient leurs propres applications à l'aide d'environnements et d'outils mis à disposition par le fournisseur de cloud. Enfin, dans un troisième modèle, appelé « IaaS » (de l'anglais « Infrastructure-as-a-Service ») le fournisseur de cloud computing met à disposition des utilisateurs des ressources de calcul, de communication ou de stockage. Les utilisateurs peuvent alors déployer et exécuter n'importe quel logiciel, y compris leur propre système d'exploitation, qui exploite les ressources ainsi mises à disposition. Ainsi, dans cet exemple d'application, le nuage 101 fonctionne selon le modèle « IaaS », le nuage 102 fonctionne selon le modèle « SaaS » et le nuage 103 fonctionne selon le modèle « PaaS ». Le client est abonné auprès du même fournisseur d'architectures, qui lui offre plusieurs architectures cloud de niveaux respectifs différents. Chacune des architectures cloud, en l'espèce les nuages 101, 102, 103, est constituée de plusieurs domaines de sécurité correspondant au modèle de cloud considéré. On suppose que pour chaque domaine de sécurité et chaque modèle de cloud, sont déployées des technologies de détection d'intrusions et de contre-mesures hétérogènes à différents niveaux d'abstraction, c'est-à-dire aux niveaux IaaS, SaaS et PaaS. Grâce à l'invention, le client peut alors obtenir une vue unifiée de la sécurité de son infrastructure inter-cloud. En effet, on considère l'infrastructure inter-cloud constituée de trois couches logicielles : IaaS, PaaS et SaaS. Pour chaque architecture cloud de l'infrastructure, c'est-à-dire pour chaque nuage, et pour chaque domaine de sécurité de cette architecture, un contrôleur de sécurité, supervise sélectivement les couches pertinentes selon le modèle déployé. Ainsi, dans le nuage 101, correspondant au modèle IaaS, un contrôleur supervise la couche IaaS. Dans le nuage 102, correspondant au modèle SaaS, un contrôleur supervise les couches IaaS et PaaS. Dans le nuage 103, correspondant au modèle SaaS, un contrôleur supervise les couches IaaS, PaaS et SaaS. Ces différentes vues sont ensuite agrégées pour chacun des cloud élémentaires par un superviseur de sécurité. Les superviseurs de chaque cloud peuvent ensuite dialoguer ensemble pour déclencher des réactions inter cloud, négocier des politiques de sécurité, ou réconcilier des politiques et des mécanismes hétérogènes entre chaque cloud.

Un contrôleur de sécurité selon un premier exemple de réalisation de l'invention va maintenant être décrit en relation avec la figure 3.

Le contrôleur de sécurité CS30 est destiné à superviser un ensemble de ressources (non représentées sur la figure 3) groupées selon un domaine de sécurité (non représenté sur la figure 3) et à dialoguer avec un superviseur de sécurité (non représenté sur la figure 3) du nuage. On entend ici par supervision, la capacité d'être informé d'événements de sécurité supervisés qui surviennent au niveau des ressources, et d'envoyer des ordres de sécurité aux ressources en réaction à ces événements de sécurité. Le contrôleur de sécurité CS30 est également adapté pour transmettre au superviseur de sécurité tout événement de sécurité reçu d'une ressource du domaine de sécurité qu'il supervise, et pour recevoir du superviseur et retransmettre à une ressource du domaine un ordre de sécurité. A cette fin, le contrôleur de sécurité est un équipement informatique tel qu'un serveur qui comprend :
- une unité de traitement 31, ou "CPU" (de l'anglais "Control Processing Unit") ;
- un ensemble de mémoires 32, dont une mémoire volatile, ou "RAM" (pour "Random Access Memory") utilisée pour exécuter des instructions de code, stocker des variables, etc., et une mémoire réinscriptible adaptée pour mémoriser une base de réactions BdR1,
- un ensemble 33 d'interfaces, adapté pour dialoguer d'une part avec les ressources et d'autre part avec le superviseur de sécurité. Les ressources d'un domaine de sécurité sont associées respectivement à une couche d'exécution, par exemple une couche matérielle, une couche de virtualisation, une couche virtuelle, etc. Ainsi, cet ensemble 33 d'interfaces comprend :
   - des interfaces 33-1 de supervision, adaptées pour recevoir des ressources des événements de sécurité qui se produisent sur les ressources. Les événements de sécurité qui doivent être remontés sont préalablement paramétrés. Plus précisément, chaque couche d'exécution comprend une interface de supervision. Une ressource étant associée à une couche d'exécution, les événements de sécurité remontés au contrôleur utilisent l'interface de supervision associée à la couche d'exécution de la ressource. Les interfaces 33-1 constituent des premiers moyens de réception, agencés pour recevoir d'une ressource qu'il supervise un événement de sécurité ;
   - des interfaces 33-2 de réaction, adaptée pour transmettre à une ressource un ordre de sécurité à appliquer. Chaque couche d'exécution comprend une interface de réaction. Ces interfaces 33-2 constituent des premiers moyens d'envoi, agencés pour envoyer à une ressource un ordre de sécurité. L'ordre de sécurité peut être sélectionné à partir de la base de réactions BdR1. De tels ordres correspondent à des réactions réflexes. L'ordre de sécurité peut également être reçu du superviseur ;
   - une interface 33-3 de communication avec le superviseur de sécurité du nuage. Cette interface 33-3 de communication est destinée à transmettre au superviseur tout événement de sécurité reçu par le contrôleur à travers une des interfaces 33-1 de supervision, et à recevoir du superviseur des ordres de sécurité à transmettre à une ou plusieurs ressources que le contrôleur supervise, à travers une des interfaces 33-2 de réaction. Cette interface 33-3 de communication constitue des deuxièmes moyens de réception, agencés pour recevoir du superviseur un ordre de sécurité à transmettre à une des ressources qu'il supervise. Elle constitue également des deuxièmes moyens d'envoi, agencés pour transmettre au superviseur de sécurité, l'événement de sécurité reçu de la ressource ;
- une base de réactions BdR₁ qui associe à un événement de sécurité une réaction. Une réaction consiste en un ordre de sécurité à appliquer à une ressource. Ainsi, cette base de réactions BdR1 permet au contrôleur CS30 d'identifier, sur réception d'un événement de sécurité issu d'une ressource, un ordre de sécurité à envoyer à la ressource ou à une autre ressource du domaine de sécurité. L'autre ressource est associée potentiellement à une couche d'exécution différente de celle associée à la ressource qui est à l'origine de l'événement de sécurité ;
- des moyens de sélection 34, agencés pour sélectionner un ordre de sécurité à appliquer à une ressource suite à la réception d'un événement de sécurité. Ces moyens de réaction prennent en entrée l'événement de sécurité reçu de la ressource et la base de réactions BdR₁ et fournissent en sortie un ordre de sécurité, appelé réaction réflexe, à l'attention d'une ressource du domaine qu'il supervise ;

Les moyens décrits ci-dessus communiquent via un bus de communication.

L'ensemble d'interfaces 33 et les moyens de sélection 35, sont de préférence des modules logiciels comprenant des instructions logicielles pour faire exécuter les étapes du procédé de supervision mises en oeuvre par le contrôleur de sécurité.

Un superviseur de sécurité selon un premier exemple de réalisation de l'invention va maintenant être décrit en relation avec la figure 4.

Le superviseur de sécurité SS40 est adapté pour piloter l'ensemble des contrôleurs de sécurité du nuage (les contrôleurs et le nuage ne sont pas représentés sur la figure 4) auquel il est associé. Ainsi, le superviseur garantit une coordination et une cohérence de la sécurité qui est appliquée au niveau du nuage, à travers les différents contrôleurs. Par ailleurs, il agit comme un point de décision finale et permet de mettre en oeuvre au niveau des ressources du nuage des réactions optimisées inter domaines de sécurité. Le superviseur SS40 est également adapté pour négocier et corréler des politiques de sécurité avec d'autres superviseurs de sécurité d'autres nuages. Ainsi, le superviseur permet d'assurer une supervision de l'architecture globale, même si celle-ci est composée d'architectures cloud élémentaires hétérogènes, constituant dans son ensemble une architecture inter-cloud. Il garantit par ailleurs une homogénéité de la sécurité dans l'architecture globale. Le superviseur SS40 est un équipement informatique tel qu'un serveur qui comprend :
- une unité de traitement 41, ou CPU ;
- un ensemble de mémoires 42, dont une mémoire volatile, ou "RAM" (pour "Random Access Memory") utilisée pour exécuter des instructions de code, stocker des variables, etc., et une mémoire réinscriptible adaptée pour mémoriser une base de connaissance BdC, une base de réactions BdR2 et une politique de sécurité PS ;
- la base de connaissance BdC, adaptée pour enregistrer tout événement de sécurité survenu au niveau d'une ressource du nuage et reçu d'un contrôleur de sécurité du nuage qui supervise la ressource ;
- la base de réactions BdR₂, adaptée pour mémoriser des règles de bon fonctionnement et des réactions à mettre en oeuvre à l'intérieur du nuage ;
- la politique de sécurité PS définit une stratégie globale de la sécurité au niveau du nuage. Une telle stratégie permet d'adapter la sécurité en fonction des événements qui se produisent à l'intérieur du nuage et qui sont remontés au superviseur. Ainsi, selon les événements qui sont remontés, un ensemble de règles définissant les réactions à mettre en oeuvre peut être préféré à un autre ;
- des moyens d'analyse et de réaction 43, agencés pour analyser les événements de sécurité enregistrés dans la base de connaissance BdC au regard des réactions enregistrées dans la base de réactions BdR₂, et pour inférer des réactions sur les ressources du nuage. Les réactions se traduisent par des ordres de sécurité à appliquer à des ressources du nuage ;
- une ensemble 44 d'interfaces de communication. Cet ensemble 44 d'interfaces comprend :
   - des interfaces de communication internes 44-1, agencées pour communiquer avec les contrôleurs de sécurité du nuage. Plus précisément, ces interfaces internes 44-1 sont agencées pour recevoir des contrôleurs de sécurité tous les événements de sécurité reçus des ressources par les contrôleurs de sécurité, et pour transmettre aux contrôleurs des ordres de sécurité générés à partir des moyens d'analyse et de corrélation 43. Les interfaces internes 44-1 constituent des moyens d'envoi, agencés pour envoyer aux contrôleurs de sécurité du nuage des ordres de sécurité à appliquer à une ou plusieurs ressources du nuage par l'intermédiaire de ces contrôleurs, et des moyens de réception, agencés pour recevoir des contrôleurs de sécurité du nuage des événements de sécurité survenus au niveau de ressources supervisées par ces contrôleurs ;
   - des interfaces de communication externes 44-2, agencées pour communiquer avec les autres superviseurs de sécurité de l'architecture.
- des moyens de négociation et de corrélation 45 agencés pour négocier avec d'autres superviseurs de l'architecture inter-cloud sur la base des politiques de sécurité respectives des nuages et pour corréler ces politiques de manière à obtenir une politique de sécurité globale et homogène. Les moyens de négociation et de corrélation 47 permettent, le cas échéant, de générer des ordres de sécurité à appliquer à l'intérieur du nuage.

Les moyens communiquent via un bus de communication.

Les moyens d'analyse et de réaction 43, l'ensemble d'interfaces 44, les moyens de négociation 45 sont de préférence des modules logiciels comprenant des instructions logicielles pour faire exécuter les étapes du procédé de supervision décrit en relation avec la figure 2 qui sont exécutées par le superviseur.

## Revendications

1. Procédé de supervision de la sécurité d'une architecture (10) comprenant une pluralité de nuages (101, 102, 103) interconnectés, un nuage comprenant une pluralité de ressources et un superviseur de sécurité (SS₁₀₁, SS₁₀₂, SS₁₀₃), ledit superviseur étant apte à piloter un ensemble de contrôleurs de sécurité (CS11, CS12) d'un nuage, la pluralité de ressources formant dans le nuage une pluralité de groupes de ressources associés respectivement à un domaine de sécurité (ds11, ds12, ...), un contrôleur de sécurité (CS11, CS12, ...) supervisant les ressources du domaine, une pluralité de machines physiques comprenant les ressources de la pluralité de nuages, les superviseurs de sécurité des nuages respectifs comprenant un ensemble de règles de sécurité formant une politique de sécurité, le procédé comprenant :
- une étape (E22) de réception d'un événement de sécurité par un contrôleur de sécurité (CS11) d'un premier nuage (101), en provenance d'une première ressource (r13) associée à un premier domaine de sécurité (ds11),
- une étape (E24) d'envoi dudit événement de sécurité au superviseur de sécurité (SS101) du premier nuage,
- une étape (E27) d'envoi par le superviseur de sécurité du premier nuage (SS₁₀₁) d'un ordre de sécurité en réaction à l'événement de sécurité à au moins un deuxième contrôleur de sécurité du premier nuage, et d'envoi par le deuxième contrôleur de sécurité de l'ordre de sécurité à une deuxième ressource supervisée par le deuxième contrôleur,
- une étape (E28) d'envoi par le superviseur du premier nuage aux autres superviseurs de nuages, d'informations relatives à l'événement de sécurité,
- une étape (E29) de négociation entre le premier superviseur et les autres superviseurs des autres nuages, au cours de laquelle un deuxième ordre de sécurité est déterminé en fonction des informations relatives à l'événement de sécurité qui s'est produit dans le premier nuage, le cas échéant d'au moins un ordre de sécurité qui a été appliqué, et des politiques de sécurité respectives des autres superviseurs de sécurité,
- une étape (E30) d'envoi par au moins un des autres superviseurs à au moins une troisième ressource du deuxième ordre de sécurité, la troisième ressource étant comprise dans un nuage différent du premier nuage, ledit autre superviseur supervisant ledit nuage différent du premier nuage.

2. Procédé de supervision selon la revendication 1, comprenant :
- une étape (E26) de détection d'une incohérence entre une base de connaissance (BdC) du superviseur, ladite base comprenant tous les événements de sécurité envoyés par les contrôleurs du premier nuage et une base de règles (BdR₂) du premier nuage, ladite base comprenant les règles de fonctionnement à l'intérieur du premier nuage.

3. Procédé de supervision selon la revendication 1, dans lequel la première ressource comprise dans le premier domaine de sécurité étant associée à un premier niveau d'exécution, le procédé comprend en outre :
- une étape (E23) de sélection et d'envoi d'un deuxième ordre de sécurité par le contrôleur de sécurité (CS11) du premier domaine à une troisième ressource du premier domaine de sécurité, la troisième ressource étant associée à un deuxième niveau d'exécution.

4. Système de supervision de la sécurité d'une architecture informatique, ladite architecture comprenant une pluralité de nuages (101, 102, 103) interconnectés, un nuage comprenant une pluralité de ressources et un superviseur de sécurité (SS101, SS102, SS103), ledit superviseur étant apte à piloter un ensemble de contrôleurs de sécurité (CS11, CS12) d'un nuage, la pluralité de ressources formant dans le nuage une pluralité de groupes de ressources associés respectivement à un domaine de sécurité (ds11, ds12, ...), un contrôleur de sécurité (CS11, CS12, ...) supervisant les ressources du domaine, les superviseurs de sécurité des nuages respectifs comprenant un ensemble de règles de sécurité formant une politique de sécurité, une pluralité de machines physiques comprenant les ressources de la pluralité de nuages, le système comprenant :
- des moyens (33-1) de réception compris dans un contrôleur de sécurité d'un premier nuage, agencés pour recevoir un événement de sécurité en provenance d'une première ressource associée à un premier domaine de sécurité,
- des premiers moyens (33-3) d'envoi, compris dans le contrôleur de sécurité, agencés pour envoyer ledit événement de sécurité au superviseur de sécurité du premier nuage,
- des deuxièmes moyens (44-1) d'envoi, compris dans le superviseur du premier nuage, agencés pour envoyer un ordre de sécurité en réaction à l'événement de sécurité à au moins un deuxième contrôleur de sécurité du premier nuage,
- des troisièmes moyens (33-2) d'envoi, compris dans le deuxième contrôleur, agencés pour envoyer à une deuxième ressource supervisée par le deuxième contrôleur, l'ordre de sécurité,
- des troisièmes moyens d'envoi, agencés pour que le superviseur du premier nuage envoie aux autres superviseurs de nuages des informations relatives à l'événement de sécurité,
- des moyens de négociation, agencés pour que le premier superviseur et les autres superviseurs des autres nuages négocient un deuxième ordre de sécurité déterminé en fonction des informations relatives à l'événement de sécurité qui s'est produit dans le premier nuage, le cas échéant d'au moins un ordre de sécurité qui a été appliqué, et des politiques de sécurité respectives des autres superviseurs de sécurité,
- des quatrièmes moyens d'envoi, agencés pour qu'au moins un des autres superviseurs envoie à au moins une troisième ressource le deuxième ordre de sécurité, la troisième ressource étant comprise dans un nuage différent du premier nuage, ledit autre superviseur supervisant ledit nuage différent du premier nuage.

## Patentansprüche

1. Verfahren zur Überwachung der Sicherheit einer Architektur (10), die eine Vielzahl miteinander verbundener Clouds (101, 102, 103) enthält, wobei eine Cloud eine Vielzahl von Ressourcen und einen Sicherheits-Supervisor (SS₁₀₁, SS₁₀₂, SS₁₀₃) enthält, wobei der Supervisor eine Einheit von Sicherheitscontrollern (CS11, CS12) einer Cloud steuern kann, wobei die Vielzahl von Ressourcen in der Cloud eine Vielzahl von Gruppen von Ressourcen bildet, die je einer Sicherheitsdomäne (ds11, ds12, ...) zugeordnet sind, wobei ein Sicherheitscontroller (CS11, CS12, ...) die Ressourcen der Domäne überwacht, wobei eine Vielzahl von physischen Maschinen die Ressourcen der Vielzahl von Clouds enthält, wobei die Sicherheits-Supervisoren der jeweiligen Clouds eine Einheit von Sicherheitsregeln enthalten, die eine Sicherheitspolitik bilden, wobei das Verfahren enthält:
- einen Schritt (E22) des Empfangs eines Sicherheitsereignisses durch einen Sicherheitscontroller (CS11) einer ersten Cloud (101) ausgehend von einer ersten Ressource (r13), die einer ersten Sicherheitsdomäne (ds11) zugeordnet ist,
- einen Schritt (E24) des Sendens des Sicherheitsereignisses an den Sicherheits-Supervisor (SS₁₀₁) der ersten Cloud,
- einen Schritt (E27) des Sendens eines Sicherheitsbefehls als Reaktion auf das Sicherheitsereignis durch den Sicherheits-Supervisor (SS₁₀₁) der ersten Cloud an mindestens einen zweiten Sicherheitscontroller der ersten Cloud, und des Sendens des Sicherheitsbefehls durch den zweiten Sicherheitscontroller an eine vom zweiten Controller überwachte zweite Ressource,
- einen Schritt (E28) des Sendens von Informationen bezüglich des Sicherheitsereignisses durch den Supervisor der ersten Cloud an die anderen Supervisoren von Clouds,
- einen Schritt (E29) der Absprache zwischen dem ersten Supervisor und den anderen Supervisoren der anderen Clouds, während dessen ein zweiter Sicherheitsbefehl abhängig von den Informationen bezüglich des in der ersten Cloud aufgetretenen Sicherheitsereignisses, ggf. von mindestens einem Sicherheitsbefehl, der angewendet wurde, und den jeweiligen Sicherheitspolitiken der anderen Sicherheits-Supervisoren bestimmt wird,
- einen Schritt (E30) des Sendens des zweiten Sicherheitsbefehls durch mindestens einen der anderen Supervisoren an mindestens eine dritte Ressource, wobei die dritte Ressource in einer anderen Cloud als der ersten Cloud enthalten ist, wobei der andere Supervisor die andere Cloud als die erste Cloud überwacht.

2. Überwachungsverfahren nach Anspruch 1, das enthält:
- einen Schritt (E26) der Erfassung einer Inkohärenz zwischen einer Wissensbasis (BdC) des Supervisors, wobei die Basis alle von den Controllern der ersten Cloud gesendeten Sicherheitsereignisse enthält, und einer Basis von Regeln (BdR₂) der ersten Cloud, wobei die Basis die Betriebsregeln innerhalb der ersten Cloud enthält.

3. Überwachungsverfahren nach Anspruch 1, wobei die in der ersten Sicherheitsdomäne enthaltene erste Ressource einem ersten Ausführungsniveau zugeordnet ist, wobei das Verfahren außerdem enthält:
- einen Schritt (E23) der Auswahl und des Sendens eines zweiten Sicherheitsbefehls durch den Sicherheitscontroller (CS11) der ersten Domäne an eine dritte Ressource der ersten Sicherheitsdomäne, wobei die dritte Ressource einem zweiten Ausführungsniveau zugeordnet ist.

4. System zur Überwachung der Sicherheit einer EDV-Architektur, wobei die Architektur eine Vielzahl von miteinander verbundenen Clouds (101, 102, 103) enthält, wobei eine Cloud eine Vielzahl von Ressourcen und einen Sicherheits-Supervisor (SS101, SS102, SS103) enthält, wobei der Supervisor eine Einheit von Sicherheitscontrollern (CS11, CS12) einer Cloud steuern kann, wobei die Vielzahl von Ressourcen in der Cloud eine Vielzahl von Gruppen von Ressourcen bildet, die je einer Sicherheitsdomäne (ds11, ds12, ...) zugeordnet sind, wobei ein Sicherheitscontroller (CS11, CS12, ...) die Ressourcen der Domäne überwacht, wobei die Sicherheits-Supervisoren der jeweiligen Clouds eine Einheit von Sicherheitsregeln enthalten, die eine Sicherheitspolitik bilden, wobei eine Vielzahl von physischen Maschinen die Ressourcen der Vielzahl von Clouds enthält, wobei das System enthält:
- in einem Sicherheitscontroller einer ersten Cloud enthaltene Empfangseinrichtungen (33-1), die eingerichtet sind, um ein von einer einer ersten Sicherheitsdomäne zugeordneten ersten Ressource kommendes Sicherheitsereignis zu empfangen,
- im Sicherheitscontroller enthaltene erste Sendeeinrichtungen (33-3), die eingerichtet sind, um das Sicherheitsereignis an den Sicherheits-Supervisor der ersten Cloud zu senden,
- im Supervisor der ersten Cloud enthaltene zweite Sendeeinrichtungen (44-1), die eingerichtet sind, um einen Sicherheitsbefehl als Reaktion auf das Sicherheitsereignis an mindestens einen zweiten Sicherheitscontroller der ersten Cloud zu senden,
- im zweiten Controller enthaltene dritte Sendeeinrichtungen (33-2), die eingerichtet sind, um den Sicherheitsbefehl an eine vom zweiten Controller überwachte zweite Ressource zu senden,
- dritte Sendeeinrichtungen, die eingerichtet sind, damit der Supervisor der ersten Cloud an die anderen Supervisoren von Clouds Informationen bezüglich des Sicherheitsereignisses sendet,
- Abspracheeinrichtungen, die eingerichtet sind, damit der erste Supervisor und die anderen Supervisoren der anderen Clouds einen zweiten Sicherheitsbefehl absprechen, der abhängig von den Informationen bezüglich des Sicherheitsereignisses, das in der ersten Cloud aufgetreten ist, ggf. von mindestens einem Sicherheitsbefehl, der angewendet wurde, und von den jeweiligen Sicherheitspolitiken der anderen Sicherheits-Supervisoren bestimmt wird,
- vierte Sendeeinrichtungen, die eingerichtet sind, damit mindestens einer der anderen Supervisoren den zweiten Sicherheitsbefehl an mindestens eine dritte Ressource sendet, wobei die dritte Ressource in einer anderen Cloud als der ersten Cloud enthalten ist, wobei der andere Supervisor die andere Cloud als die erste Cloud überwacht.

## Claims

1. Method for supervising the security of an architecture (10) comprising a plurality of interconnected clouds (101, 102, 103), a cloud comprising a plurality of resources and a security supervisor (SS₁₀₁, SS₁₀₂, SS₁₀₃), said supervisor being able to drive a set of security controllers (CS11, CS12) of a cloud, the plurality of resources forming a plurality of resource groups in the cloud that are respectively associated with a security domain (ds11, ds12, etc.), a security controller (CS11, CS12, etc.) supervising the resources of the domain, a plurality of physical machines comprising the resources of the plurality of clouds, the security supervisors of the respective clouds comprising a set of security rules forming a security policy, the method comprising:
- a step (E22) of reception of a security event by a security controller (CS11) of a first cloud (101), originating from a first resource (r13) associated with a first security domain (ds11),
- a step (E24) of sending of said security event to the security supervisor (SS101) of the first cloud,
- a step (E27) of sending of a security order by the security supervisor of the first cloud (SS₁₀₁) to at least a second security controller of the first cloud in reaction to the security event, and of sending of the security order by the second security controller to a second resource supervised by the second controller,
- a step (E28) of sending by the supervisor of the first cloud to the other supervisors of clouds, of information relating to the security event,
- a step (E29) of negotiation between the first supervisor and the other supervisors of the other clouds, in the course of which a second security order is determined as a function of the information relating to the security event which occurred in the first cloud, if appropriate of at least one security order which has been applied, and respective security policies of the other security supervisors,
- a step (E30) of sending by at least one of the other supervisors to at least one third resource of the second security order, the third resource being included in a different cloud from the first cloud, said other supervisor supervising said different cloud from the first cloud.

2. Supervision method according to Claim 1, comprising:
- a step (E26) of detection of an inconsistency between a knowledge base (BdC) of the supervisor, said base comprising all the security events sent by the controllers of the first cloud and a rule base (BdR₂) of the first cloud, said base comprising the rules of operation inside the first cloud.

3. Supervision method according to Claim 1, wherein, the first resource included in the first security domain being associated with a first execution level, the method furthermore comprises:
- a step (E23) of selecting and sending of a second security order by the security controller (CS11) of the first domain to a third resource of the first security domain, the third resource being associated with a second execution level.

4. System for supervising the security of a computer architecture, said architecture comprising a plurality of interconnected clouds (101, 102, 103), a cloud comprising a plurality of resources and a security supervisor (SS101, SS102, SS103), said supervisor being able to drive a set of security controllers (CS11, CS12) of a cloud, the plurality of resources forming, in the cloud, a plurality of groups of resources respectively associated with a security domain (ds11, ds12, etc.), a security controller (CS11, CS12, etc.) supervising the resources of the domain, the security supervisors of the respective clouds comprising a set of security rules forming a security policy, a plurality of physical machines comprising the resources of the plurality of clouds, the system comprising:
- reception means (33-1), included in a security controller of a first cloud, designed to receive a security event originating from a first resource associated with a first security domain,
- first sending means (33-3), included in the security controller, designed to send said security event to the security supervisor of the first cloud,
- second sending means (44-1), included in the supervisor of the first cloud, designed to send a security order to at least a second security controller of the first cloud in reaction to the security event,
- third sending means (33-2), included in the second controller, designed to send the security order to a second resource supervised by the second controller,
- third sending means, designed so that the supervisor of the first cloud sends to the other supervisors of clouds information relating to the security event,
- means of negotiation, designed so that the first supervisor and the other supervisors of the other clouds negotiate a second security order determined as a function of the information relating to the security event which occurred in the first cloud, if appropriate of at least one security order which has been applied, and respective security policies of the other security supervisors,
- fourth sending means, designed so that at least one of the other supervisors sends to at least one third resource the second security order, the third resource being included in a different cloud from the first cloud, said other supervisor supervising said different cloud from the first cloud.
